Europäisches Patentamt

European Patent Office

Office européen des brevets

(11) Numéro de publication: **0 035 451**
**B1**

(19)

(12) **FASCICULE DE BREVET EUROPEEN**

(45) Date de publication du fascicule du brevet:
27.06.84

(21) Numéro de dépôt: 81400309.1

(22) Date de dépôt: 27.02.81

(51) Int. Cl.³: **C 21 C 5/48, C 22 B 9/10**

(54) **Procédé d'introduction simultanée et séparée d'au moins un gaz et d'une matière pulvérulente dans une tuyère à usage métallurgique.**

(30) Priorité: 05.03.80 FR 8004932
27.01.81 FR 8101489

(43) Date de publication de la demande:
09.09.81 Bulletin 81/36

(45) Mention de la délivrance du brevet:
27.06.84 Bulletin 84/26

(84) Etats contractants désignés:
AT BE DE GB IT LU NL

(56) Documents cités:
FR - A - 2 153 153
FR - A - 2 310 401

(73) Titulaire: **CREUSOT-LOIRE, 42 rue d'Anjou,**
**F-75008 Paris (FR)**
Titulaire: **Sprunck, Emile, 5 rue Joffre,**
**F-57250 Moyeuvre-Grande (FR)**

(72) Inventeur: **Leroy, Pierre, 23, rue de Tourville,**
**F-78100 Saint-Germain-en-Laye (FR)**
Inventeur: **Deschamps, Maurice, 13, rue des Dalhias,**
**F-42230 Roche-la-Molière (FR)**
Inventeur: **Sprunck, Emile, 5, rue Joffre,**
**F-57250 Moyeuvre-Grande (FR)**

(74) Mandataire: **Leroy, Pierre, CREUSOT-LOIRE 15 rue**
**Pasquier, F-75383 Paris Cedex 08 (FR)**

## Description

La présente invention s'applique à des tuyères utilisables dans l'élaboration des métaux à l'état liquide, solide ou pâteux.

Les tuyères utilisées en métallurgie peuvent être simples (à un seul tube), doubles (à deux tubes concentriques) ou multiples (à plusieurs tubes concentriques).

Elles peuvent servir à introduire soit des gaz, oxydants, neutres ou réducteurs, soit des liquides, par exemple des liquides de protection des tuyères contre l'usure à chaud, soit des matières pulvérulentes, oxydantes, réductrices, ou scorifiantes.

La méthode usuelle pour transporter ou introduire une matière pulvérulente dans un récipient métallurgique consiste à mettre cette poudre en suspension dans un gaz porteur. Or, cette méthode présente trois inconvénients dans le cas d'une opération métallurgique:

— elle entraîne une consommation de gaz porteur qui n'est pas négligeable,
— le gaz porteur se dissolvant au moins partiellement dans le bain métallique, peut être nuisible dans l'élaboration du métal en cours, et aussi dans les gaz d'échappement,
— la poudre ainsi mise en suspension a généralement un effet abrasif prononcé sur les parois des conduites et des tubes qu'elle parcourt.

Une autre méthode, connue dans le domaine du transport de produits pétroliers, mais non appliquée en métallurgie, consiste à introduire la matière visqueuse ou pulvérulente sous pression poussée par tout moyen mécanique connu tel qu'une vis d'Archimède par exemple, dans un tube ou dans une conduite dont la paroi intérieure est recouverte d'un film de liquide lubrifiant introduit de place en place le long du tube ou de la conduite. On évite ainsi les inconvénients de la méthode citée précédemment.

D'autre part, dans bien des cas d'élaboration d'un métal à l'état liquide, il est utile, et parfois même indispensable, que tel gaz d'affinage, par exemple oxydant, ne soit pas mis en contact avec la matière pulvérulente, par exemple du charbon pulvérisé.

Le but de la présente invention est de permettre d'introduire simultanément et séparément, dans des tuyères doubles ou multiples, à usage métallurgique, au moins un gaz et une matière pulvérulente, sans utiliser aucun gaz porteur de ladite matière pulvérulente et sans provoquer aucun effet d'abrasion par celle-ci.

A cet effet, la présente invention a pour objet un procédé d'introduction simultanée et séparée, dans une tuyère à usage métallurgique comportant au moins deux tubes concentriques bien centrés, d'au moins un gaz dans un tube non extérieur et d'une matière pulvérulente et comprimée dans un autre tube, tandis que le tube extérieur est parcouru par un agent protecteur de la tuyère contre son usure à chaud, tel que du propane, du gaz naturel, du fuel-oil, du dioxyde de carbone liquide, une pâte ou une poudre contenant du carbone, qui peut être ladite matière pulvérulente et comprimée elle-même, etc. . . ., ce procédé étant caractérisé en ce que l'on introduit, par une fente ménagée dans le tube qui reçoit la matière pulvérulente et comprimée, une substance lubrifiante qui forme un film sur la paroi interne dudit tube.

Dans une première variante de l'invention, pour une tuyère à deux tubes, le gaz parcourt le tube central, tandis que la matière pulvérulente et comprimée parcourt le tube extérieur lubrifié et assure elle-même la protection de la tuyère contre l'usure à chaud, par exemple si elle contient suffisamment de carbone. Dans ce cas là, la protection par un agent protecteur spécial devient inutile, et la tuyère peut alors se limiter à deux tubes concentriques.

Dans une deuxième variante de l'invention, pour une tuyère à trois tubes, le gaz parcourt le tube central, la matière pulvérulente parcourt le tube intermediaire lubrifié, et l'agent protecteur parcourt le tube extérieur de la tuyère. Dans ce cas, la matière pulvérulente n'est pas en mesure d'assurer la protection de la tuyère contre l'usure à chaud.

Dans une troisième variante de l'invention, également pour une tuyère à trois tubes, la matière pulvérulente parcourt le tube central lubrifié, le gaz parcourt le tube intermédiaire, et l'agent protecteur parcourt le tube extérieur de la tuyère.

Dans une quatrième variante, cette fois pour une tuyère à quatre tubes concentriques, destinée à introduire séparément et simultanément deux gaz distincts et une matière pulvérulente dans un récipient métallurgique, la matière pulvérulente et comprimée parcourt le tube central, lubrifié sur sa paroi interne par un film d'une substance lubrifiante introduite par une fente ménagée dans ledit tube central, le premier gaz, qui peut être de la vapeur d'eau ou de l'oxygène, parcourt le premier tube intermédiaire, et le deuxième gaz, qui peut être de l'oxygène ou de la vapeur d'eau, parcourt le deuxième tube intermédiaire, tandis que l'agent protecteur de la tuyère contre son usure à chaud parcourt le tube extérieur de la tuyère, ledit oxygène pouvant tenir en suspension de la poudre de chaux et/ou de castine et/ou de minerai.

D'autres variantes sont possibles, sans sortir du cadre de l'invention.

Dans les deux premières variantes, la matière pulvérulente emprunte dans la tuyère un passage annulaire. Or elle provient d'une conduite circulaire lubrifiée dans laquelle elle se trouve poussée par tout moyen mécanique, tel qu'une vis d'Archimède.

Son adaptation à une conduite annulaire est effectuée par élargissement de la conduite circulaire, au moyen d'un cône intérieur convenablement placé dans la zone élargie. Celle-ci est en fait constituée d'un tronc de cône extérieur raccordant deux conduits circulaires. Le cône intérieur est profilé en fonction du tronc de cône extérieur, tous deux allant s'élargissant dans le sens de l'écoulement de la matière. Toutes les parois en contact avec la matière pulvérulente sont lubrifiées.

Dans ces diverses variantes, il n'est pas exclu que le gaz serve de support à une autre matière pulvérulente, en suspension, avec laquelle il est compatible, par exemple de l'oxygène tenant en suspension de la poudre de chaux. Mais cette matière pulvérulente en suspension dans le gaz utilisé ne constitue pas une caractéristique de la présente invention, dont l'objectif est d'introduire séparément un gaz et une matière pulvérulente lorsqu'ils ne doivent avoir aucun contact entre eux avant leur admission dans le bain métallique.

Les applications métallurgiques du procédé selon l'invention peuvent être fort nombreuses.

Les tuyères peuvent être utilisées par exemple pour introduire simultanément et séparément dans un bain liquide à base de fer d'une part de l'oxygène, d'autre part du charbon pulvérulent. Dans une telle opération, l'objectif recherché peut être par exemple une gazéification de charbon pulvérulent, ou bien une refusion d'éponges de fer ou de ferrailles, avec ou sans réduction directe de minerai en phase liquide, avec ou sans récupération du gaz combustible d'échappement.

On peut aussi utiliser ce procédé selon l'invention dans l'affinage de la fonte en acier, pour introduire de la poudre de chaux (ou de castine, ou de minerai), sans la mettre en suspension dans l'oxygène d'affinage. Ainsi, on évite l'effet d'abrasion, par la poudre de chaux, ou de castine, ou de minerai, de la conduite et du tube d'oxygène de la tuyère. On évite aussi de donner aux particules de chaux une vitesse de sortie notable au nez de la tuyère, ce qui peut parfois présenter des inconvénients d'entrainement direct des particules de chaux à travers le bain et jusque dans les gaz du convertisseur.

Afin de bien faire comprendre l'invention, on va décrire ci-après à titre d'exemples non limitatifs, le fonctionnement de quatre modes de réalisation de tuyères appliquant le procédé selon l'invention.

Le premier mode de réalisation fait partie de la première variante mentionnée ci-dessus, c'est-à-dire qu'il s'agit d'une tuyère double, que le gaz parcourt le tube central de la tuyère tandis que la matière pulvérulente parcourt le tube extérieur, qui est lubrifié.

La fig. 1 est une coupe transversale d'une telle tuyère.

La fig. 2 est une coupe longitudinale de la même tuyère.

Le deuxième mode de réalisation fait partie de la deuxième variante mentionnée ci-dessus, c'est-à-dire qu'il s'agit d'une tuyère triple, que le gaz parcourt le tube central de la tuyère, que la matière pulvérulente parcourt le tube intermédiaire lubrifié, et qu'un agent protecteur, qui est ici du fuel-oil domestique, parcourt le tube extérieur.

La fig. 3 est une coupe transversale d'une telle tuyère.

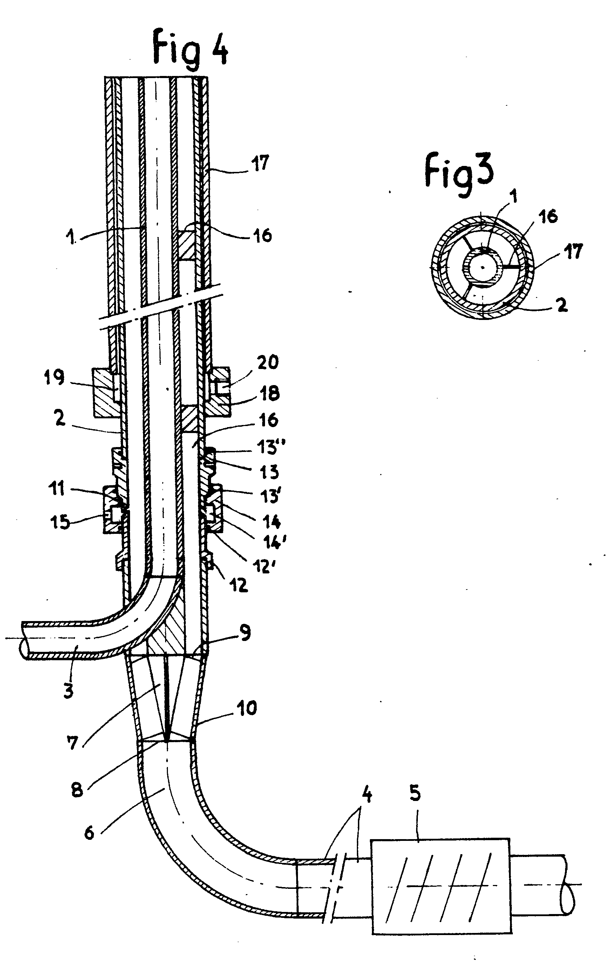

La fig. 4 est une coupe longitudinale de la même tuyère.

Le troisième mode de réalisation fait partie de la troisième variante mentionnée ci-dessus, c'est-à-dire qu'il s'agit d'une tuyère triple, que le flux de matière pulvérulente reste circulaire sur tout son parcours et pénètre dans le tube central de la tuyère, que le gaz est introduit dans le tube intermédiaire, et qu'un agent protecteur, qui est ici du fuel-oil domestique, parcourt le tube extérieur de la tuyère.

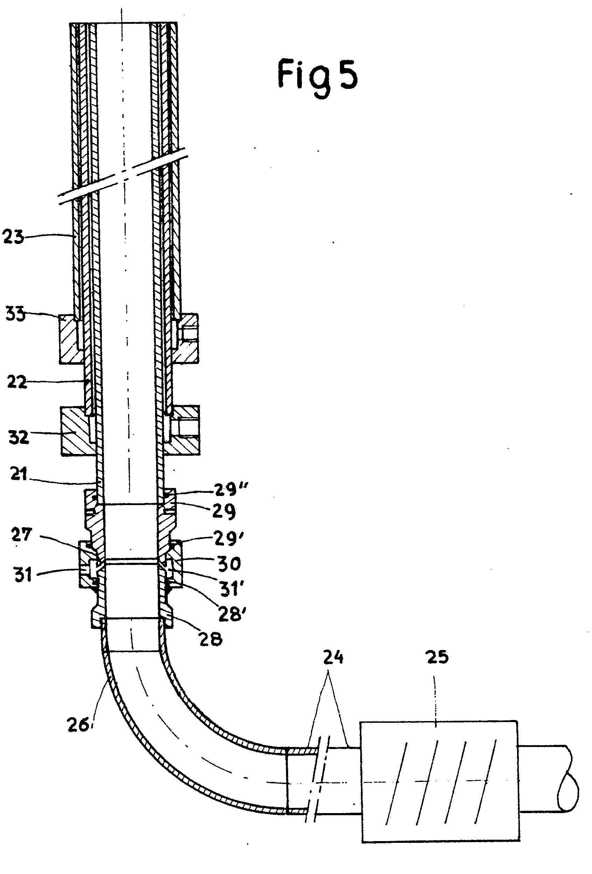

La fig. 5 est une coupe longitudinale d'une telle tuyère.

Le quatrième mode de réalisation fait partie de la quatrième variante, mentionnée ci-dessus, c'est-à-dire qu'il s'agit d'une tuyère quadruple, que le flux de matière pulvérulente reste circulaire sur tout son parcours et pénètre dans le tube central de la tuyère, qu'un premier gaz, qui est ici de la vapeur d'eau, est introduit dans le premier tube intermédiaire, qu'un deuxième gaz, qui est ici de l'oxygène tenant en suspension de la poudre de chaux, est introduit dans le deuxième tube intermédiaire, et qu'un agent protecteur, qui est ici du fuel-oil domestique, parcourt le tube extérieur de la tuyère.

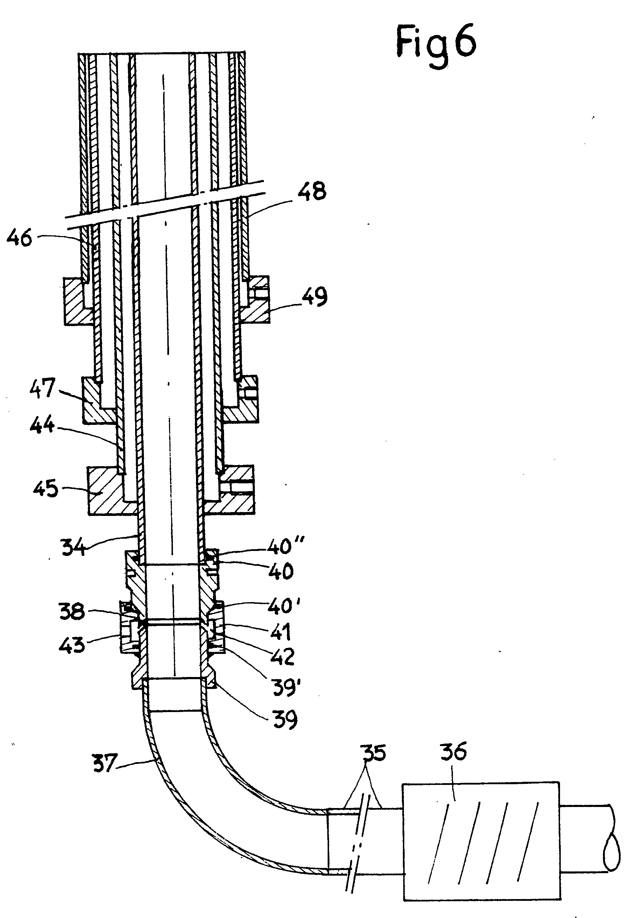

La fig. 6 est une coupe longitudinale d'une telle tuyère.

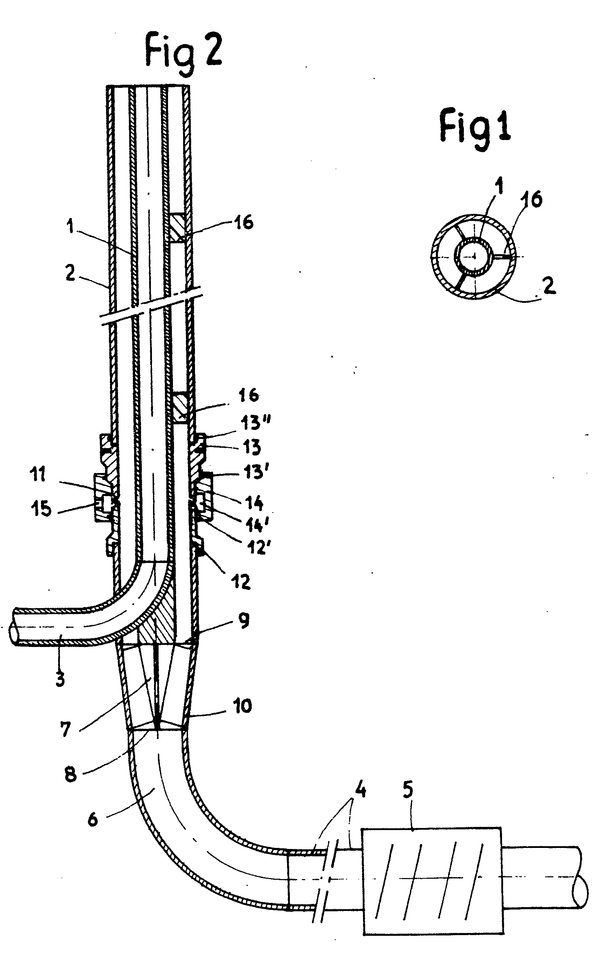

Examinons d'abord le premier mode de tuyère selon les fig. 1 et 2. Dans cet exemple, le gaz introduit dans le tube central est de l'oxygène, et la matière pulvérulente introduite dans le tube extérieur est du charbon pulvérisé.

Le tube central 1 de la tuyère double est parcouru par l'oxygène, en provenance d'une conduite 3. Le tube extérieur 2 est parcouru par le charbon pulvérisé sous pression, poussé dans une conduite 4 par une vis d'Archimède située dans le dispositif 5. Après le coude 6, un cône 7, prenant appui sur les entretoises 8 et 9 et placé au centre d'un tronc de cône 10 qui prolonge le coude 6, transforme l'écoulement cylindrique de charbon pulvérisé en provenance du coude 6 en un écoulement annulaire entre les tubes 1 et 2 de la tuyère.

Pour que la poussée de la vis d'Archimède suffise à assurer l'écoulement du charbon pulvérisé sans risque de blocage, il est nécessaire que la paroi soit lubrifiée. Dans le présent exemple, la lubrification est assurée par du fuel-oil lourd, qui est introduit en faible quantité de façon à former un film très mince sur la paroi. Dans la tuyère en question, l'introduction de ce lubrifiant sur la paroi interne du tube extérieur 2 s'effectue de manière connue par une fente circulaire 11 ménagée entre les manchons 12 et 13, et disposée à 45° dans le sens de l'écoulement.

Ces deux manchons 12 et 13 sont assemblés au moyen d'une bague 14.

Sur toute la circonférence de la fente 11, le lubrifiant est distribué par le tore 14', alimenté par un petit canal 15 percé dans la bague 14 et convenablement raccordé à une source de lubrifiant non représentée sur les figures.

Un premier joint torique 12' assure l'étanchéité entre le manchon 12 et la bague 14.

Un autre joint torique 13' assure l'étanchéité entre le manchon 13 et la bague 14, tandis qu'un troisième joint torique 13'' assure l'étanchéité entre le manchon 13 et le tube 2.

Tout le long de la conduite d'alimentation 4 en charbon pulvérisé, la lubrification de la paroi interne de la conduite 4 est assurée par des introductions, de place en place, à intervalles réguliers, de faibles quantités de fuel-oil lourd au moyen de fentes circulaires et de manchons semblables à la fente 11 et aux manchons 12, 13 et 14, mais qui n'ont pas été représentés sur la fig. 2.

Le tube 1 est centré dans le tube 2 au moyen d'entretoises telles que 16 assez fines pour ne pas gêner l'écolement du charbon pulvérisé entre les deux tubes 1 et 2 de la tuyère.

Dans ce premier mode de réalisation d'une tuyère appliquant le procédé selon l'invention, le charbon pulvérisé contenant une forte proportion de carbone suffit à assurer la protection de la tuyère contre l'usure à chaud en présence d'un bain métallique liquide dans un convertisseur, pour autant que le bain ne soit pas entièrement décarburé, ce qui est le cas pour un certain nombre d'opérations telles que: gazéification du charbon, refusion de ferrailles ou d'éponges de fer, etc. . . ., dans lesquelles on maintient dans le bain une certaine teneur en carbone. Il n'est alors pas nécessaire d'introduire dans la tuyère un agent protecteur spécial, puisque la protection est déjà assurée par le charbon pulvérisé.

Au contraire, lorsque la matière pulvérulente n'est pas capable d'assurer elle-même la protection de la tuyère contre l'usure, par exemple s'il s'agit de minerai de fer, ou de castine, ou de toute autre matière pulvérulente dépourvue de carbone, il fait faire appel à la 2ème ou à la 3ème variante de l'invention, en tuyère triple, avec un agent protecteur spécial, distinct de la matière pulvérulente, ou encore à la 4ème variante.

Le deuxième mode de réalisation d'une tuyère appliquant le procédé selon l'invention citée à titre d'exemple non limitatif et conforme à la deuxième variante est représenté sur les fig. 3 et 4.

Cette tuyère diffère de la précédente uniquement en ce qu'elle comporte en plus un troisième tube 17, extérieur aux tubes 1 et 2, alimenté en un agent protecteur contre l'usure, qui est ici du fuel-oil domestique, par un manchon 18 muni d'un tore creux 19 alimenté par un canal 20. Avec une telle tuyère, la matière pulvérulente est ici un mélange de minerai de fer et de castine, matières abrasives si elles étaient en suspension dans un gaz porteur, et inoffensives dans ce type de tuyère. Le gaz qui parcourt le tube central 1 est encore de l'oxygène, et la tuyère est utilisée à l'affinage de la fonte en acier dans un convertisseur.

Le troisième mode de réalisation d'une tuyère appliquant le procédé selon l'invention et conforme à la troisième variante est représenté sur la fig. 5.

Dans cet exemple, le gaz introduit dans la tuyère est de l'oxygène, tandis que la matière pulvérulente utilisée est du carbone pulvérisé. (Ce pourrait être d'ailleurs n'importe quelle autre matière pulvérulente, abrasive ou non, telle que du minerai de fer, de la chaux, de la castine, du spath, etc. . . ., utilisée pour l'opération métallurgique considérée.)

Le tube central 21 de la tuyère triple est ici parcouru par le charbon pulvérisé sous pression, poussé dans la conduite 24 par une vis d'Archimède située dans le dispositif 25, et arrivant ensuite par le coude 26.

Le lubrifiant est encore ici constitué par du fuel-oil lourd. Il est introduit par une fente circulaire 27 ménagée entre les manchons 28 et 29, et disposée à 45° dans le sens de l'écoulement du charbon pulvérisé.

Ces deux manchons 28 et 29 sont assemblés au moyen d'une bague 30.

Sur toute la circonférence de la fente 27, le lubrifiant est distribué par le tore 31, alimenté par un petit canal 31 percé dans la bague 30 et convenablement raccordé à une source de lubrifiant non représentée sur la fig. 5.

Un premier joint torique 28' assure l'étanchéité entre le manchon 28 et la bague 30.

Un autre joint torique 29' assure l'étanchéité entre le manchon 29 et la bague 30, tandis qu'un troisième joint torique 29'' assure l'étanchéité entre le manchon 29 et le tube 21.

C'est par l'assemblage des manchons 28 et 29 et de la bague 30 que le coude 26 se trouve relié au tube 21.

La conduite 24 d'alimentation en charbon pulvérisé est lubrifiée de place en place de façon semblable, comme indiqué ci-dessus au premier mode de réalisation.

Le tube intermédiaire 22 de la tuyère triple est ici alimenté en oxygène, au moyen d'un manchon creux 32.

Le tube extérieur 23 est alimenté en un agent protecteur contre l'usure, qui est ici du fuel-oil domestique, au moyen du manchon creux 33.

Le quatrième mode de réalisation d'une tuyère appliquant le procédé selon l'invention, à titre d'exemple conforme à la quatrième variante, est représenté sur la fig. 6.

Dans cet exemple, les deux gaz à introduire séparément dans la tuyère sont de la vapeur d'eau et de l'oxygène, ce dernier pouvant contenir en suspension, à certains moments ou même en permanence, de la poudre de chaux, tandis que la matière pulvérulente utilisée est du charbon pulvérisé.

Dans cet exemple, l'objectif métallurgique est une gazéification du charbon sous bain ferreux à teneur en carbone et température peu variables, avec ou sans refusion d'éponges de fer ou de ferrailles, avec ou sans réduction directe du minerai de fer en phase liquide, le réglage des débits respectifs d'oxygène et de vapeur d'eau permettant de maîtriser entièrement le contrôle thermique de l'opération, l'introduction séparée de charbon permettant de régler la cadence de gazéification, et le réglage du débit de poudre de chaux en suspension dans l'oxygène permettant de contrôler la formation du laitier, qui rend possible par décrassage l'élimination d'une part importante du soufre du charbon. La protection de la tuyère contre l'usure est assurée d'une façon indépendante par l'agent protecteur périphérique.

Sur la fig. 6, le tube central 34 de la tuyère quadruple est parcouru par le charbon pulvérisé sous pression, poussé dans la conduite 35 par une vis d'Archimède située dans le dispositif 36 et arrivant ensuite par le coude 37.

Le lubrifiant est constitué par du fuel-oil lourd. Il est introduit par une fente circulaire 38 ménagée entre les manchons 39 et 40, et disposée à 45° dans le sens de l'écoulement du charbon pulvérisé.

Ces deux manchons 39 et 40 sont assemblés au moyen d'une bague 41.

Sur toute la circonférence de la fente 38, le lubrifiant est distribué par le tore 42 alimenté par un petit canal 43 percé dans la bague 41 et convenablement raccordé à une source de lubrifiant non représenté sur la fig. 6.

Un premier joint torique 39' assure l'étanchéité entre le manchon 39 et la bague 41. Un autre joint torique 40' assure l'étanchéité entre le manchon 40 et la bague 41, tandis qu'un troisième joint torique 40" assure l'étanchéité entre le manchon 40 et le tube central 34.

Le premier tube intermédiaire 44 de la tuyère quadruple est ici alimenté en vapeur d'eau, au moyen d'un manchon creux 45.

Le deuxième tube intermédiaire 46 est ici alimenté en oxygène tenant en suspension de la poudre de chaux, au moyen d'un manchon creux 47.

Enfin, le tube extérieur 45 est alimenté en un agent protecteur de la tuyère contre l'usure, qui est ici du fuel-oil domestique, au moyen d'un manchon creux 49.

Il est bien entendu que l'on peut, sans sortir du cadre de l'invention, imaginer des variantes et perfectionnements de détails, de même qu'envisager l'emploi de moyens équivalents.

Le procédé selon l'invention s'applique spécialement bien aux tuyères de convertisseurs métallurgiques, tels que les convertisseurs d'aciérie par exemple.

**Revendications**

1. Procédé d'introduction simultanée et séparée, dans une tuyère à usage métallurgique comportant au moins deux tubes concentriques bien centrés, d'au moins un gaz dans un tube non extérieur, et d'une matière pulvérulente et comprimée dans un autre tube, tandis que le tube extérieur est parcouru par un agent protecteur de la tuyère contre son usure à chaud, ce procédé étant caractérisé en ce que l'on introduit, par une fente ménagée dans le tube qui reçoit la matière pulvérulente et comprimée une substance lubrifiante qui forme un film sur la paroi interne dudit tube, la matière pulvérulente et comprimée pouvant constituer elle-même, ou non, ledit agent protecteur de la tuyère contre son usure à chaud.

2. Procédé selon la revendication 1, utilisable dans le cas d'une tuyère à deux tubes concentriques bien centrés, caractérisé en ce que le gaz parcourt le tube central (1) tandis que la matière pulvérulente et comprimée parcourt le tube extérieur (2), dont la paroi interne est garnie d'un film d'une substance lubrifiante introduite par une fente (11) ménagée dans ledit tube extérieur (2), la matière pulvérulente assurant elle-même la protection de la tuyère contre son usure à chaud.

3. Procédé selon la revendication 1, utilisable dans le cas d'une tuyère à trois tubes concentriques bien centrés, caractérisé en ce que le gaz parcourt le tube central (1), la matière pulvérulente et comprimée parcourt le tube intermédiaire (2), dont la paroi interne est garnie d'un film d'une substance lubrifiante introduite par une fente (11) ménagée dans ledit tube intermédiaire (2), et l'agent protecteur de la tuyère contre son usure à chaud parcourt le tube extérieur (17) de la tuyère.

4. Procédé selon la revendication 1, utilisable dans le cas d'une tuyère à trois tubes concentriques bien centrés, caractérisé en ce que la matière pulvérulente et comprimée parcourt le tube central (21), dont la paroi interne est garnie d'un film d'une substance lubrifiante introduite par une fente (27) ménagée dans ledit tube central (21), le gaz parcourt le tube intermédiaire (22), et l'agent protecteur de la tuyère contre son usure à chaud parcourt le tube extérieur (23) de la tuyère.

5. Procédé selon la revendication 1, utilisable dans le cas d'une tuyère à quatre tubes concentriques bien centrés, lorsqu'il s'agit d'introduire simultanément et séparément deux gaz distincts et une matière pulvérulente, caractérisé en ce que la matière pulvérulente et comprimée parcourt le tube central (34), dont la paroi interne est garnie d'un film d'une substance lubrifiante introduite par une fente (38) ménagée dans ledit tube central (34), en ce que le premier gaz, qui peut être de la vapeur d'eau ou de l'oxygène, parcourt le premier tube intermédiaire (44), en ce que le deuxième gaz, qui peut être de l'oxygène ou de la vapeur d'eau, parcourt le deuxième tube intermédiaire (46), et en ce que l'agent protecteur de la tuyère contre son usure à chaud parcourt le tube extérieur (48) de la tuyère, ledit oxygène pouvant tenir en suspension de la poudre de chaux et/ou de castine et/ou de minerai.

6. Procédé selon l'une quelconque des revendications 2 et 3, utilisable lorsque la matière pulvérulente et comprimée parcourt un autre tube que le tube central, caractérisé en ce que la matière pulvérulente et comprimée en provenance d'une conduite circulaire lubrifiée est astreinte à parcourir une conduite annulaire lubrifiée (4), au moyen d'un cône (7) placé au centre d'un tronc de cône (10) de raccordement entre deux conduites circulaires de diamètres différents (4) et (2), le cône (7) et le tronc de cône (10) allant tous deux s'élargissant dans le sens de l'écoulement de la matière.

**Patentansprüche**

1. Verfahren zum gleichzeitigen und getrennten Einbringen wenigstens eines Gases in einem nicht außenliegenden bzw. nicht äußeren Rohr und eines pulverförmigen und komprimierten Materials in einem anderen Rohr bei einer Düse für metallurgische Zwecke, die wenigstens zwei konzentrische und gut zentrierte Rohre umfaßt, wobei das äußere Rohr von einem Schutzmittel für die Düse gegen Hitzeverschleiß durchströmt wird, dadurch gekennzeichnet, daß durch einen in dem Rohr, das das pulverförmige und komprimierte Material aufnimmt, angeordneten bzw. ausgebildeten Schlitz eine Schmiermittelsubstanz eingeführt wird, die einen Film auf der Innenwand des Rohres bildet und daß gegebenenfalls das pulverförmige und komprimierte Material selbst, oder auch nicht, das Schmutzmittel der Düse gegen Hitzeverschleiß bilden kann.

2. Verfahren nach Anspruch 1, verwendbar für den Fall einer Düse mit zwei konzentrischen, gut zentrierten Rohren, dadurch gekennzeichnet, daß das Gas das zentrale Rohr (1) durchströmt, während das pulverförmige und komprimierte Material das äußere Rohr (2) durchströmt, dessen Innenwand mit einem Film einer Schmiermittelsubstanz versehen ist, die durch einen Schlitz (11) eingebracht wird, der im äußeren Rohr (2) vorgesehen ist, und daß das pulverförmige Material selbst den Schutz der Düse gegen Hitzeverschleiß gewährleistet.

3. Verfahren nach Anspruch 1, verwendbar für den Fall einer Düse mit drei konzentrischen und gut zentrierten Rohren, dadurch gekennzeichnet, daß das Gas das zentrale Rohr (1) durchströmt, daß das pulverförmige und komprimierte Material das mittlere bzw. das dazwischenliegende Rohr (2) durchströmt, dessen Innenwand mit einem Film aus einer Schmiermittelsubstanz versehen ist, die durch einen im mittleren Rohr (2) vorgesehenen Schlitz (11) eingeführt wird und daß das Schutzmittel für die Düse gegen Hitzeverschleiß das Außenrohr (17) der Düse durchströmt.

4. Verfahren nach Anspruch 1, verwendbar für den Fall einer Düse mit drei konzentrischen und gut zentrierten Rohren, dadurch gekennzeichnet, daß das pulverförmige und komprimierte Material das zentrale Rohr (21) durchströmt, dessen Innenwand mit einem Film aus einer Schmiermittelsubstanz versehen ist, die durch einen im zentralen Rohr (21) vorgesehenen Schlitz (27) eingeführt wird, daß das Gas das mittlere bzw. dazwischenliegende Rohr (22) durchströmt und daß das Schmutzmittel für die Düse gegen Hitzeverschleiß das äußere Rohr (23) der Düse durchströmt.

5. Verfahren nach Anspruch 1, verwendbar im Falle einer Düse mit vier konzentrischen, gut zentrierten Rohren zum gleichzeitigen und getrennten Einbringen von zwei unterschiedlichen Gasen und einem pulverförmigen Material, dadurch gekennzeichnet, daß das pulverförmige und komprimierte Material das zentrale Rohr (34) durchströmt, dessen Innenwand mit einem Film aus einer Schmiermittelsubstanz versehen ist, die durch einen im zentralen Rohr (34) vorgesehen Schlitz (38) eingebracht wird, daß das erste Gas, das Wasserdampf oder Sauerstoff sein kann, das erste zwischenliegende Rohr (44) durchströmt, daß das zweite Gas, das Sauerstoff oder Wasserdampf sein kann, das zweite zwischenliegende Rohr (46) durchströmt und daß das Schutzmittel für die Düse gegen Hitzeverschleiß das äußere bzw. außenliegende Rohr (48) der Düse durchströmt, wobei der Sauerstoff Kalk- und/oder Kalksteinzuschlag- und/oder Mineralpulver suspendiert halten kann.

6. Verfahren nach Anspruch 2 und 3, verwendbar für den Fall, daß das pulverförmige und komprimierte Material ein anderes als das zentrale Rohr durchströmt, dadurch gekennzeichnet, daß das pulverförmige und komprimierte Material, das aus einem geschmierten Kreislauf kommt, zum Durchlaufen einer ringförmigen geschmierten Leitung (4) mittels eines Kegels (7) veranlaßt wird, die im Zentrum bzw. Mittelpunkt eines Verbindungskegelstumpfes (10) zwischen zwei kreisförmigen Leitungen (4) und (2) von verschiedenen Durchmessern angeordnet ist, wobei sich der Kegel (7) und der Kegelstumpf (10) in Strömungsrichtung des Materials erweitern.

**Claims**

1. A process for simultaneous and separate introduction, into a tuyere, for use in metallurgy, comprising at least two accurately centred concentric tubes, of at least one gas into a tube which is not an outer tube, and of a pulverulent and compressed material into another tube, whilst the outer tube is carrying an agent protecting the tuyere against its wear when hot, this process being characterised in that there is introduced, through a slit arranged in the tube receiving the pulverulent and compressed material, a lubricating substance which forms a film on the inner wall of the said tube, the pulverulent and compressed material being capable of forming, as such or not, the said agent protecting the tuyere against its wear when hot.

2. A process according to claim 1, capable of being used with a tuyere having two accurately centred concentric tubes, characterized in that the gas is carried in the central tube (1) whilst the pulverulent and compressed material is carried in the outer tube (2), whose inner wall is lined by a film of a lubricating substance introduced through a slit (11) arranged in the said outer tube (2), the pulverulent material as such providing the protection of the tuyere against its wear when hot.

3. A process according to claim 1, capable of being used with a tuyere having three accurately centred concentric tubes, characterized in that the gas is carried in the central tube (1), the pulverulent and compressed material is carried in the intermediate tube (2), whose inner wall is lined by a film of a lubricating substance introduced through a slit (11) arranged in the said intermediate tube (2), and the agent protecting the tuyere against its wear when hot is carried in the outer tube (17) of the tuyere.

4. A process according to claim 1, capable of being used with a tuyere having three accurately centred concentric tubes, characterized in that the pulverulent and compressed material is carried in the central tube (21), whose inner wall is lined by a film of a lubricating substance introduced through a slit (27) arranged in the said central tube (21), the gas is carried in the intermediate tube (22), and the agent protecting the tuyere against its wear when hot is carried in the outer tube (23) of the tuyere.

5. A process according to claim 1, capable of being used with a tuyere having four accurately centred concentric tubes, when two individual gases and a pulverulent material are to be introduced simultaneously and separately, characterized in that the pulverulent and compressed material is carried in the central tube (34), whose inner wall is lined by a film of a lubricating substance introduced through a slit (38) arranged in the said central tube (34), in that the first gas, which may be steam or oxygen, is carried in the first intermediate tube (44), in that the second gas, which may be oxygen or steam, is carried in the second intermediate tube (46), and in that the agent protecting the tuyere against its wear when hot is carried in the outer tube (48) of the tuyere, the said oxygen being capable of containing, suspended in the form of powder, lime and/or limestone and/or ore.

6. A process according to either one of claims 2 and 3, capable of being used when the pulverulent and compressed material is carried in a tube other than the central tube, characterized in that the pulverulent and compressed material arriving from a lubricated circular duct is constrained to pass through a lubricated annular duct (4), by means of a cone (7) placed in the centre of a conical frustum (10) connecting two circular ducts of different diameters (4) and (2), both the cone (7) and the conical frustum (10) becoming wider in the direction of the flow of the material.

0 035 451

Fig 2

Fig 1

9

Fig 4

Fig3

Fig 5

23
33
22
32
21
27
31

29''
29
29'
30
31'
28'
28

26'
24
25

# Fig 6